# EUROPEAN PATENT APPLICATION

(11) **EP 2 631 769 A2**
(43) Date of publication of application: **28.08.2013**
(21) Application number: 12192055.7
(22) Date of filing: 09.11.2012
(51) Int. Cl.: G06F 3/0488, G06F 3/0484, H04M 1/00

(54) **Apparatus and Method of Handling a Touch Input in a Terminal**

(30) Priority: 24.02.2012 KR 20120018905
(71) Applicant: Samsung Electronics Co., Ltd., Suwon-si, Gyeonggi-do, 443-742 (KR)
(72) Inventor: Kwon, Beom-Joon, Gyeonggi-do (KR)
(74) Representative: Gover, Richard Paul

(57) **Abstract**

A method and an apparatus for operating a portable terminal are provided. The method includes searching for a view including a touch region among two or more views displayed, determining whether a bypass function is set for the searched view, and determining whether to execute a command corresponding to the view according to whether the bypass function is set.

## Description

### BACKGROUND OF THE INVENTION

### 1. Field of the Invention:

The present invention relates to a portable terminal. More particularly, the present invention relates to an apparatus and method for a portable terminal with a dual Subscriber Identification Module (SIM) card.

### 2. Description of the Related Art:

The development of portable terminals has enabled users to do various things. For example, users can view moving images or pictures, check news and weather information, and play games by accessing the Internet through portable terminals.

However, as portable terminals provide more functions, a user is required to go through a more complex process in order to perform various functions. For example, when several windows are displayed in a superimposed manner for one function, a user is required to input user information on each screen and repeat the process of closing each window on which the user inputs information.

Also, in the above example, when several windows are displayed on the portable terminal, a user may input information into a window or a keypad that is not intended by the user due to a user input error.

Therefore, a need exists for a bypass function that allows touch input to an uppermost view, and to all other views, when a plurality of views are displayed as superimposed.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for setting a bypass function with respect to all displayable views to process a touch input of not only an uppermost view but also of the other views even when a plurality of views are displayed in a superimposed manner.

Another aspect of the present invention is to provide an apparatus and method for enabling a user to set a bypass function with respect to a specific view and use this in various environments, thus improving the user's convenience.

Another aspect of the present invention is to provide an apparatus and method for displaying a view whose touch input is not processed, on a display unit of a portable terminal.

In accordance with a first aspect of the present invention, a method for operating a portable terminal is provided. The method includes searching for a view including a touch region among two or more views displayed, determining whether a bypass function is set for the searched view, and determining whether to execute a command corresponding to the view according to whether the bypass function is set.

In accordance with a second aspect of the present invention, a method for operating a portable terminal is provided. The method includes displaying two or more views, determining whether a bypass function is automatically set for each of the views displayed, and determining whether to execute a command corresponding to the view according to whether the bypass function is set.

In accordance with a third aspect of the present invention, an electronic device is provided. The electronic device includes one or more processors; memory; and one or more programs, wherein the one or more programs are stored in the memory and configured to cause, when executed by the electronic device, the electronic device to perform the method of the first or second aspects of the invention.

In accordance with one embodiment of the present invention, an apparatus of a portable terminal is provided. The apparatus includes a display unit for displaying two or more views, and a control unit for searching for a view including a touch region among the two or more views displayed, for determining whether a bypass function is set for the searched view, and for determining whether to execute a command corresponding to the view according to whether the bypass function is set.

The apparatus further comprises an input for receiving a selection of a specific region from a user, wherein the control unit checks coordinates of the touch region.

The two or more views displayed may beviews that are displayed on a display unit of the portable terminal sequentially from the bottom in a vertical direction such that the views are superimposed at least partially.

The bypass function may be a function for determining whether to execute a touched view when any one of the two or more views displayed is touched.

The control unit may execute a command corresponding to the searched view when the bypass function is set to false for the searched view.

The control unit may determine whether the bypass function is set in a second-order view, without executing a command corresponding to the searched view when the bypass function is set to true for the searched view.

The second-order view may be a view that is superimposed at least partially with a region of the view set to true and is located beneath the view set to true.

The view may include at least one of a keypad, a pop-up window, a picture, and a moving image.

In accordance with another embodiment of the present invention, an apparatus of a portable terminal is provided. The apparatus includes a display unit for displaying two or more views, and a control unit for determining whether a bypass function is automatically set for each of the views displayed, and for determining whether to execute a command corresponding to the view according to whether the bypass function is set.

The bypass function may be a function for determining whether to execute a touched view when any one of the two or more views displayed is touched.

The control unit may execute a command corresponding to the displayed view when the bypass function is set to false for the displayed view.

The control unit may determine whether the bypass function is set in a second-order view, without executing a command corresponding to the displayed view when the bypass function is set to true for the displayed view.

The view may include at least one of a keypad, a pop-up window, a picture, and a moving image.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will become more apparent from the following description taken in conjunction with the accompanying drawings, in which:

FIG. 1 is a diagram illustrating a portable terminal processing a touch input according to an exemplary embodiment of the present invention;

FIGs. 2A and 2B are diagrams illustrating a plurality of views displayed according to an exemplary embodiment of the present invention;

FIG. 3 is a diagram illustrating a portable terminal processing a touch input according to an exemplary embodiment of the present invention;

FIG. 4 is a flow diagram illustrating a method for processing a touch input by a portable terminal according to an exemplary embodiment of the present invention; and

FIG. 5 is a block diagram illustrating a configuration of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and configurations may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

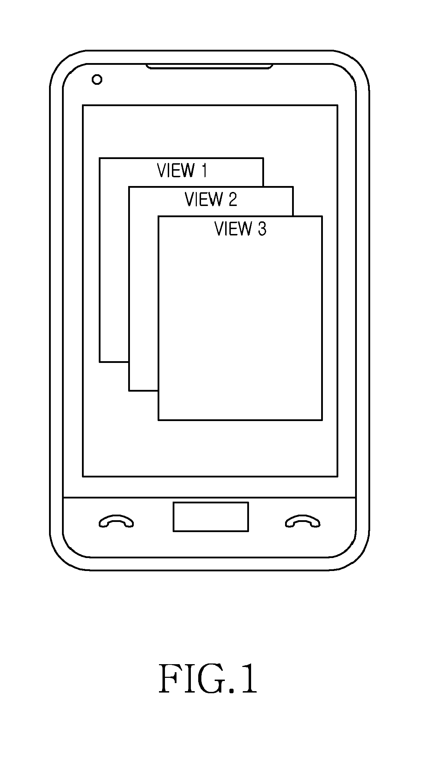

FIG. 1 is a diagram illustrating a portable terminal processing a touch input according to an exemplary embodiment. In the exemplary embodiment illustrated in FIG. 1, three views are displayed on a display unit of a portable terminal. The respective views are displayed on the display unit of the portable terminal sequentially from the bottom in a vertical direction such that their regions are superimposed at least partially. That is, view 1 is displayed on the display unit of the portable terminal, view 2 is displayed on view 1 such that at least a partial region thereof is superimposed on view 1, and view 3 is displayed on view 1 and view 2 such that at least a partial region thereof is superimposed on view 1 and view 2.

For example, when a user connects to a specific Internet site, view 1 may be a main screen, which is displayed on the display unit of the portable terminal. Thereafter, view 2, which may be a keypad, is displayed so that the user may input specific information. After view 2 is displayed, view 3, which may be a pop-up window containing detailed information on a product, may be displayed so that an advertiser can advertise a product or service. That is, for example, view 1 is a main window displayed on the portable terminal, and view 2 is a keypad displayed on view 1 such that at least a partial region thereof is superimposed on view 1. View 3 is a pop-up window containing detailed information on a product that is displayed on view 1 and view 2 such that at least a partial region thereof is superimposed on view 1 and view 2. Thus, it is assumed that two or more views in a portable terminal, which allow a touch input according to exemplary embodiments of the present invention, are views that are displayed on a display unit of the portable terminal sequentially from the bottom in a vertical direction such that their regions are superimposed at least partially. Herein, the view may be defined as a window that can be displayed on the display unit of the portable terminal. For example, the view may include at least one of a keypad, a pop-up window, a picture, and a moving image.

A description will be given of a method for processing a touch input in a portable terminal when a plurality of views are displayed on a display unit of the portable terminal as illustrated in FIG. 1. First, in the related art, if a plurality of view regions are displayed on a portable terminal such that they are superimposed at least partially, when a user selects a common portion of view 1, view 2, and view 3, view 3 is displayed uppermost and is touched so that a command corresponding to view 3 is executed. That is, view 1 and view 2 are displayed under view 3, and view 1 and view 2 are not touched by the user. For example, view 1 may be a main screen of a specific Internet site, view 2 may be a keypad for receiving an input of the user, and view 3 may be a pop-up window. In such case, when the user accesses a specific Internet site, view 1, which is a main screen of the relevant site is displayed on a display unit of the portable terminal. Thereafter, when view 2 that is a keypad is displayed to receive an input of the user, the user inputs information on view 2 in order to input specific information. However, while the user is inputting specific information via the keypad displayed on view 2, view 3, which is a pop-up window, and which is not intended by the user, may be displayed on the display unit of the portable terminal. Thus, in the related art, if view regions are displayed on a display unit of a portable terminal sequentially from the bottom in a vertical direction such that they are superimposed at least partially, the view displayed uppermost always receives a touch input of a user. That is, as in the above example, while the user is inputting specific information via the keypad that is view 2, view 3 that is a pop-up window, and that is not intended by the user, may be displayed, causing inconvenience.

However, in exemplary embodiments of the present invention, a bypass function can be set for each view, which improves the user's convenience. Herein, the bypass function is defined as a function for enabling a user to set whether to execute a command corresponding to a touched view when any one of two or more views displayed on a portable terminal is touched. Specifically, regardless of the display position on a display unit of a portable terminal, whether to perform a touch input from a user may be preset in all displayable views. Detailed operations of the bypass function may be set to false and true. Specifically, if a user sets a bypass function to false with respect to a specific view, when a relevant view receives a touch input from the user, a command corresponding to the view receiving the touch input is executed. On the other hand, if a user sets a bypass function to true with respect to a specific view, when a relevant view receives a touch input from the user, a command corresponding to the view receiving the touch input is not executed.

Referring to FIG. 1, it is assumed that when three views are displayed, a user sets a bypass function to true with respect to views displayed uppermost and right thereunder (view 1 and view 2), and sets a bypass function to false with respect to a view displayed lowermost (view 3). Thereafter, when the user selects a common region of view 1, view 2, and view 3, a command corresponding to view 3 is not executed because a bypass function is preset to true with respect to the view 3. When the portable terminal determines that the bypass function is set to true with respect to view 3, the portable terminal determines the bypass function of view 2 that is a second-order view. Since the bypass function is not set to true with respect to view 2 as a result of the check, a command corresponding to view 2 is not executed. Herein, the second-order view is defined as a view that is superimposed at least partially with a region of the view set to true, and that is located beneath the view set to true. In the above example, the second-order view is view 2. When determining that a bypass function is set to true with respect to view 3 and view 2, the portable terminal checks a bypass function of view 1. When determining that a bypass function is set to false with respect to view 1, the portable terminal allows the touch input of the user to execute a command corresponding to view 1. Thus, in exemplary embodiments of the present invention, when the view regions are displayed on a display unit of a portable terminal sequentially from the bottom in a vertical direction such that they are superimposed at least partially, a specific view can allows the touch input of a user by the user's setting instead of a the touch input of the user being always applied to the uppermost view.

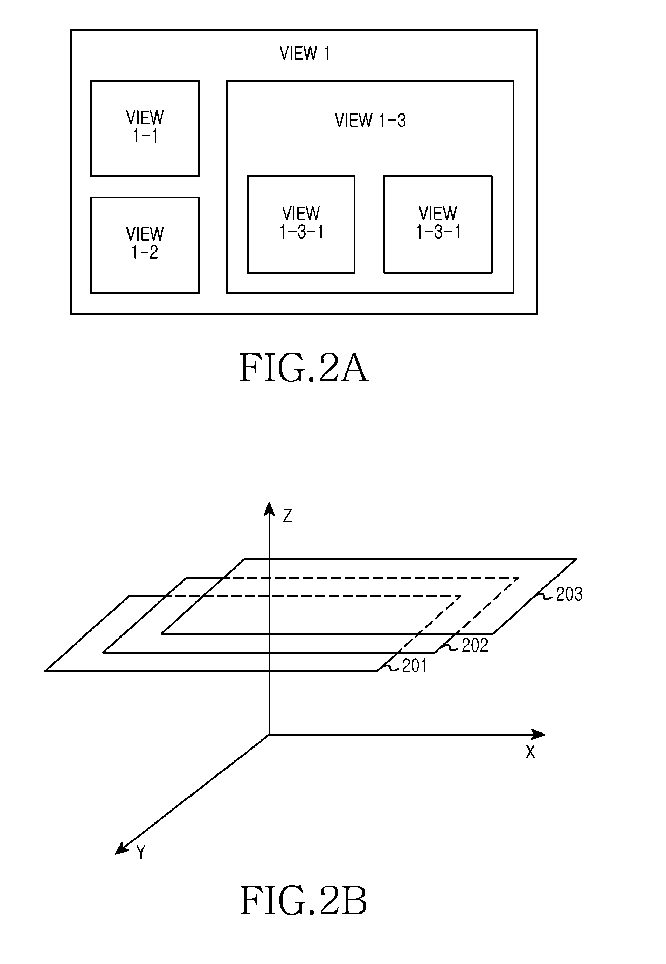

FIGs. 2A and 2B are diagrams illustrating a plurality of views displayed according to an exemplary embodiment of the present invention.

FIG. 2A is a diagram illustrating an exemplary embodiment in which a parent view and child views are displayed according to an exemplary embodiment of the present invention.

Referring to FIG. 2A, view 1 is a parent view. View 1 is displayed on a display unit of a portable terminal first, and then views 1-1, 1-2, and 1-3, which are child views of view 1, are displayed thereon. In addition, view 1-3 is a child view of view 1 and is a parent view of views 1-3-1. That is, view 1 is a parent view of all the views displayed on the display unit of the portable terminal, view 1-3 is a child view of view 1, and view 1-3 is a parent view of views 1-3-1. That is, view 1 is a parent view of all the views displayed on the display unit of the portable terminal first, and view 1-3 is a parent view of views 1-3-1, and is displayed before views 1-3-1. Since views 1-1 and 1-2 are child views of view 1 like view 1-3, they are generated and displayed simultaneously with view 1-3.

Differences between exemplary embodiments and the related art are described as follows. With respect to the related art, and using FIG. 2A for reference, in FIG. 2A, the touch input of the user is possible with respect to only two views, such as views 1-3-1. When the user touches any of view 1, view 1-1, view 1-2, and view 1-3, the portable terminal fails to receive a touch input. That is, only two views, such as views 1-3-1 displayed uppermost on the display unit of the portable terminal, can receive a touch input from the user in the related art. For example, if it is assumed that view 1-3 is a keypad, and each of views 1-3-1 is a pop-up window, when the user inputs specific information onto view 1-3, views 1-3-1,each of which being a pop-up window that is not intended by the user, are suddenly displayed. In this case, in the related art, the keypad does not operate. That is, a pop-up window that is not intended by the user is displayed, so that the keypad inputted by the user does not operate. The reason for this is that only the uppermost view among the views displayed on the display unit of the portable terminal, that is, only the view that is generated and displayed lastly, can receive the touch input of the user. Thus, the related art fails to satisfy the user's convenience.

However, in exemplary embodiments of the present invention, since a bypass function can be set with respect to all the views displayable on the portable terminal, it is possible that the view located under the uppermost view can also receive a touch input from the user according to a user's setting, rather than only the view displayed uppermost receiving the touch input. For example, when the user inputs specific information onto view 1-3, when view 1-3 is a keypad, views 1-3-1, which are not intended by the user, are suddenly displayed. However, the user can continue to input specific information in to the keypad that is view 1-3. Specifically, when the user sets a bypass function to true with respect to the view displayed uppermost, the portable terminal fails to receive a touch input for views 1-3-1, each of which being a pop-up window that is displayed uppermost. Thus, unlike the related art, instead of receiving a touch input of the user only via the view displayed uppermost, a view located under the uppermost view can receive a touch input by user's setting.

Herein, the bypass function is defined as a function for enabling a user to set whether to execute a command corresponding to a touched view when any one of two or more views is displayed. That is, regardless of a display position on the display unit of a portable terminal, whether to allow touch input from a user may be preset in all displayable views. Detailed operations of the bypass function may be set to false and true. Specifically, if a user sets a bypass function to false with respect to a specific view, when a relevant view receives a touch input from the user, a command corresponding to the view receiving the touch input is executed. On the other hand, if a user sets a bypass function to true with respect to a specific view, when a relevant view receives a touch input from the user, a command corresponding to the view receiving the touch input is not executed.

Referring to FIG. 2A and 2B, it is assumed that the user sets a bypass function to false with respect to view 1 and sets a bypass function to true with respect to the other views. When receiving a touch input from the user with respect to views 1-3-1, the portable terminal determines whether a bypass function is set in views 1-3-1. In the above assumption, since a bypass function is set to true with respect to views 1-3-1, the portable terminal does not execute a command corresponding to views 1-3-1, even though a region of views 1-3-1 receives a touch input from the user. Thereafter, the portable terminal determines whether a bypass function is set for view 1-3, which is displayed right under views 1-3-1, and is a second-order view of views 1-3-1. Since it is assumed that a bypass function is set to true with respect to view 1-3 like views 1-3-1, the portable terminal does not execute a command corresponding to view 1-3. Herein, not executing a relevant command means that, if view 1-3 is a keypad, even when the user inputs specific information via the keypad, the keypad fails to receive a the touch input. Thereafter, the portable terminal checks a bypass function of view 1, which is a second-order view of view 1-3. In the above assumption, since a bypass function is set to false only with respect to the view 1, the portable terminal does not execute a command corresponding to view 1. That is, even when the user selects a relevant portion of a region of views 1-3-1 displayed on the portable terminal, views 1-3-1 and view 1-3 fail to receive a touch input from the user and only view 1 can receive a touch input from the user. As described above, in an exemplary embodiment of the present invention, since a bypass function can be set with respect to all the views displayed in the portable terminal, not only the view displayed uppermost on the display unit of the portable terminal, but also the second-order view that is beneath the uppermost view can receive a touch input from the user.

In another exemplary embodiment of the present invention, although the user can initially set a view to receive a touch input by using a bypass function, a view to receive a touch input from the user may also be designated by determining a view displayed on the display unit of the portable terminal. For example, the user may not initially set a bypass function to false or true with respect to a specific view, and a bypass function may be automatically set to true with respect to a pop-up window that is not intended by the user. That is, the portable terminal may check in real time all the views displayed on the display unit of the portable terminal, so that a touch input may not be received when a pop-up window that is not intended by the user is displayed. In the above example, a bypass function is not set with respect to each of the views displayed on the display unit of the portable terminal, and a view that is not intended by the user is monitored in real time, so that a bypass function may be set to true only with respect to, for example, a pop-up window. That is, for example, while the user is inputting specific information via view 1-3, when view 1-3 is a keypad, a view 1-3-1 that is, for example, a pop-up window is displayed on view 1-3, but fails to receive a touch input. Thus, the user can continue to input specific information via the keypad.

FIG. 2B is a diagram illustrating an exemplary embodiment of a display type of a view according to an exemplary embodiment of the present invention.

Referring to FIG. 2B, an x axis, a y axis, and a z axis are illustrated, and three planes 201, 202 and 203 are illustrated in the z axis sequentially from the bottom. The planes 201, 202 and 203 illustrate the respective views displayed on a display unit of a portable terminal. Also, the x axis and the y axis is a reference direction when the portable terminal is disposed in plane. Specifically, the portable terminal is disposed in plane in parallel to the x axis and the y axis, and the display unit of the portable terminal is disposed in a vertical direction with respect to the z axis. When the portable terminal is disposed as above, the planes 201, 202 and 203 disposed on the z axis as described above become a position of the view displayed on the display unit of the portable terminal. That is, in exemplary embodiments of the present invention, it is assumed that views are views that are displayed on the display unit of the portable terminal sequentially from the bottom such that they are superimposed at least partially. That is, if views are disposed in parallel to the x axis and the y axis illustrated in FIG. 2B and the respective view regions are not superimposed, the views do not correspond to views in exemplary embodiments of the present invention.

When a bypass function is described with reference to FIG. 2B, it is assumed that the user sets a bypass function to false with respect to view 201 disposed at a lowermost position, and sets a bypass function to true with respect to views 201 and 202. When the user touches view 203, which is displayed uppermost on a display unit of a portable terminal, and since a bypass function is set to true with respect to the uppermost view 203 and the second-order view 202 as in the this assumption, a touch input of the user is not allowed. Only view 201 with a bypass function set to false can allow a touch input from the user. Herein, the second view 202 disposed therebetween becomes a second-order view with respect to the uppermost view 201. Specifically, when a bypass function is not set to false with respect to the uppermost view, the portable terminal determines whether a bypass function is set to false with respect to the second-order view that is disposed directly thereunder. That is, the order of checking a bypass function in the portable terminal proceeds from the uppermost view receiving a touch input of the user to the view disposed directly thereunder.

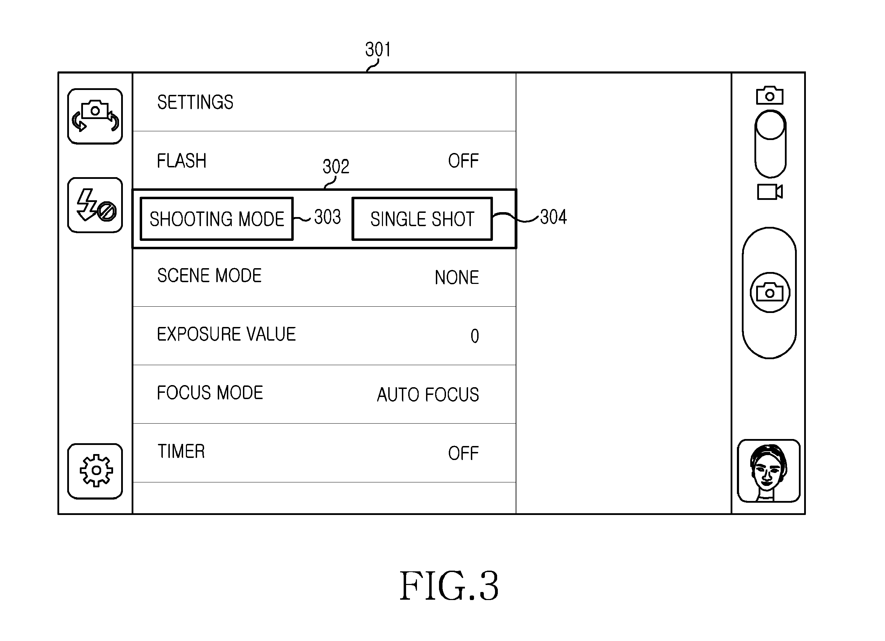

FIG. 3 is a diagram illustrating a portable terminal processing a touch input according to an exemplary embodiment of the present invention. FIG. 3 illustrates an exemplary embodiment of a setting mode of a camera provided at a portable terminal.

Referring to FIG. 3, when a user desires to change a basic setting of a camera, the user may select the setting mode and select details included in the setting mode.

More specifically, when a user selects the setting mode of a camera, a main view 301 that is an entire screen, and that is a parent view is displayed. A list view 302 that is each list item is included in the main view 301. A setting title view 303 displaying a setting title is included in each list view 302, and a setting value view 304, capable of inputting a specific setting value, is included in the setting title view 303. Specifically, referring to FIG. 3, the main view 301 becomes a parent view of the list view 302, the setting title view 303, and the setting value view 304. Likewise, the list view 302, the setting title view 303, and the setting value view 304 become child views of the main view 301. Also, the list view 302 becomes a parent view of the setting title view 303 and the setting value view 304. Likewise, the setting title view 303 and the setting value view 304 become child views of the list view 302. That is, the main view 301 becomes a parent view of all the views, and the other views become child views of the main view 301.

Specifically, referring to FIG. 3A, when the user desires to set the camera of the portable terminal to take a single shot, the user should select the setting mode. When the user selects the setting mode, the main view 301 is displayed on the display unit, and the list view 302 capable of setting the flash, a shooting mode, a screen mode, a nozzle value (exposure value), a focus mode, and a time, is included in the main view 301. Thereafter, when the user selects the setting title view 303 among the list view 302 during shooting in order to set a shot, an item including details is displayed in a shooting mode. That is, if the user desires to take a single shot and selects the setting title view 303 included in the list view 302, although not illustrated in FIG. 3, various detailed items are displayed. When the user finally selects the setting value view 304 that is a single shot, the camera is set to take a single shot.

In the above example, the setting value view 304 is included in the setting title view 303, and the setting title view 303 is included in the list view 302. That is, the list view 302 is a parent view of the setting title view 303 and the setting value view 304. Thus, referring to FIG. 3, although the setting value view 304 receives a user's touch input, a list view 302 should actually receive the touch input and change the camera setting value into a single shot. That is, the setting title view 303 and the setting value view 304 displayed uppermost do not receive a touch input from the user, but the list view 302 does receive a touch input from the user. The related art differs in that, in order to receive a touch input from the user with respect to the list view 302 as in the foregoing example, each of the setting title view 303, and the setting value view 304, would need to be implemented separately without using the same code. Thus, since the related art does not use the same code by changing only an attribute, the related art suffers both in implementation and maintenance. However, in exemplary embodiments of the present invention, since a bypass function can be set with respect to each view, exemplary embodiments of the present invention can use similar code by changing only an attribute when designing the list view 302, the setting title view 303, and the setting value view 304. Specifically, the user may set a bypass function to true with respect to the setting title value 303 and the setting value view 304 and set a bypass function to false with respect to the list view 302, so that it can be implemented simply.

Hereinafter, an exemplary embodiment of a source code according to the present invention will be described. An exemplary embodiment of a source code according to the present invention is as follows.

```
      public View findViewByCoordinate(float x, float y) {
      View resultView=.null;
      if(!mInScreen) {
      return null;
      }
      if (getVisibility() !=VISIBLE)
      return null;
      if (getBypassTouch()) // Check bypass touch flag
      return null; // if flag is set, bypass touch input.
      for (View View : mViews) {// mViews : view list
      View v = view. findViewByCoordinate(x,y); // Recursive call
      if (v!=null)
      resultView=v;
      }
      if(resultView != null)
      return resultView;
      if(contains(x,y) // Does this view contain x, y?
      return this;
      return null;
      }
      public void setBypassTouch(boolean bypass) {
      mBypassTouch=bypass;
      }
      public boolean getBypassTouch() {
      return mBypassTouch;
      }
```

Herein, if (getBypassTouch()) means reading in BypassTouch flag and returning a null if a flag is set to true.

Also, return null means that a parent of a view performs a findViewByCoordinate() function of a next child view.

Also, for (View View: mViews) {// mViews : view list, View v = view. findViewByCoordinate(x,y); // Recursive call means calling findViewByCoordinate of child views of itself and searching for a view corresponding to a touch region.

Also, if (v!=null) represents a case where a view corresponding to a touch region is found, and resultView=v; means setting the found view to resultView.

Also, if(resultView != null) and return resultView mean returning view(resultView) and ending a function when there is a found view.

Also, if(contains(x,y) // Does this view contain x, y? means determining whether itself (viewGroup) belongs to a relevant touch region.

Also, return this; means returning itself when it belongs to a relevant touch region.

Also, return null; means returning a null when it does not belong to a relevant touch region.

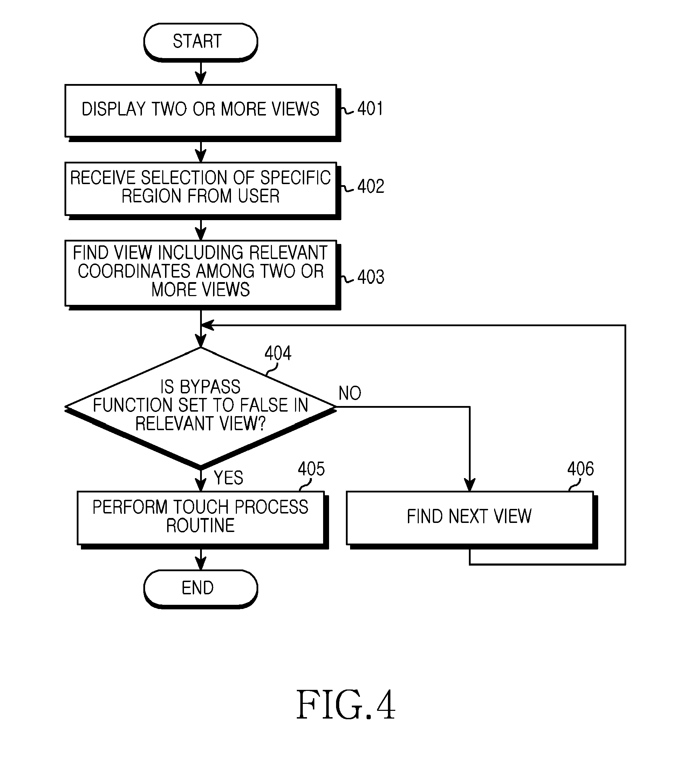

FIG. 4 is a flow diagram illustrating a method for processing a touch input by a portable terminal according to an exemplary embodiment of the present invention.

Referring to FIG. 4, two or more views are displayed on a display unit of the portable terminal in step 401. That is, two or more views are displayed on the display unit sequentially from the bottom in a vertical direction such that they are superimposed at least partially. Of course, the present process may also include a case where only one view is displayed on the display unit of the portable terminal. However, for the convenience of description, it is assumed that two or more views are displayed on the display unit of the portable terminal.

After two or more views are displayed on the display unit of the portable terminal, the portable terminal receives a selection of a specific region from a user in step 402. More specifically, when receiving a selection of a specific region from a user, the portable terminal checks the coordinates of the region touched by the user in order to perform a received touch input. That is, the portable terminal checks the coordinates of the region touched by the user in order to determine the view touched by the user among a plurality of views displayed on the display unit.

After checking the coordinates of the region touched by the user, the portable terminal searches for a view including relevant coordinates among the two or more views in step 403. More specifically, when receiving a selection for a specific region from the user, the portable terminal checks the coordinates of the region selected by the user and searches for a view including relevant coordinates in order to determine the view selected by the user.

Thereafter, when the view touched by the user is searched for, the portable terminal determines whether a bypass function is set to false with respect to the searched view in step 404. Herein, the bypass function is defined as a function for enabling a user to set whether to execute a command corresponding to a touched view when any one of two or more views displayed on a portable terminal is touched. Specifically, regardless of a display position on a display unit of a portable terminal, whether to allow a touch input from a user may be preset in all displayable views. Detailed operations of the bypass function may be set to false and true. Specifically, if a user sets a bypass function to false with respect to a specific view, when a relevant view receives a touch input from the user, a command corresponding to the view receiving the touch input is executed. On the other hand, if a user sets a bypass function to true with respect to a specific view, when a relevant view receives a touch input from the user, a command corresponding to the view receiving the touch input is not executed.

When determining whether a bypass function is set to false with respect to the view touched by the user, the portable terminal performs a touch processing routine on a view with a bypass function set to false in step 405. Specifically, the portable terminal executes a command corresponding to the view with a bypass function set to false. Herein, the execution of a relevant command means that if the view with a bypass function set to false is a keypad, the user can input specific information by the keypad.

When it is determined in step 404 that a bypass function is set to true with respect to the view touched by the user, the view selected by the user does not receive a touch input, and the portable terminal searches for a next view in step 406. Specifically, the portable terminal determines whether a bypass function is set to false with respect to a second-order view that is the next view. When a bypass function is also set to true with respect to the second-order view, the portable terminal may repeat the process of searching for a view with a bypass function set to false.

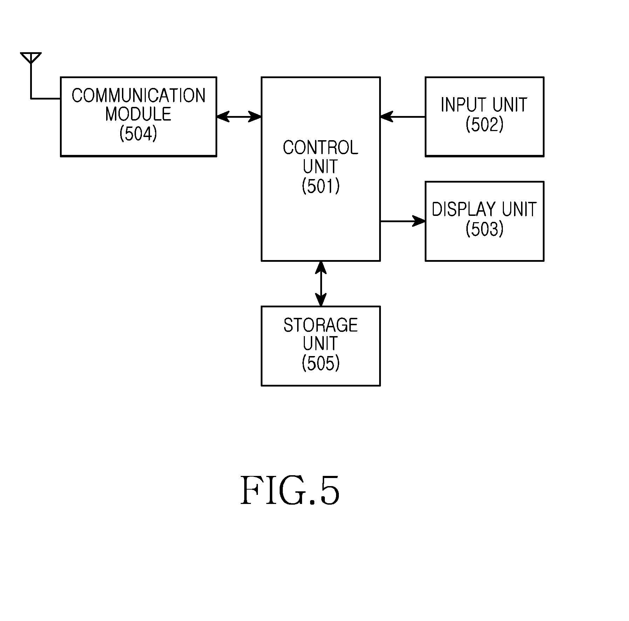

FIG. 5 is a block diagram illustrating a configuration of a portable terminal according to an exemplary embodiment of the present invention.

Referring to FIG. 5, the portable terminal according to exemplary embodiments of the present invention may include a control unit 501, an input unit 502, a display unit 503, a communication module 504, and a storage unit 505.

The control unit 501 controls operations of the portable terminal. For example, the control unit 501 searches for a view including a touched region among two or more views displayed, determines whether a bypass function is set in the searched view, and determines whether to execute a command corresponding to the view according to the determination result. Also, the control unit 501 checks the coordinates of the touch region and executes a command corresponding to the searched view when the bypass function is set to false with respect to the searched view. If the bypass function is set to true with respect to the searched view, the control unit 501 does not execute a command corresponding to the searched view and determines whether a bypass function is set with respect to a second-order view.

The input unit 502 provides the control unit 501 with input data generated by user selection. For example, the input unit 502 receives the selection of a specific region from the user.

The display unit 503 displays stored information, menu screen and state information of the portable terminal.

A touch sensitive display, called as a touch screen, may be used as the display unit 503. In this situation, a touch input may be performed via the touch sensitive display.

The communication module 504 processes signals transmitted/received through an antenna for voice and data communication.

The storage unit 505 may include a program storage unit for storing a program for controlling an operation of the portable terminal, and a data storage unit for storing data generated during the execution of a program.

In the above block configuration, the control unit 501 may control the overall functioning of the portable terminal. The above configurations should be considered in descriptive sense only and not for the purpose of limitation, and those skilled in the art will understand that various changes may be made therein without departing from the scope of the present invention. For example, although the respective units are configured and illustrated separately, the control unit 501 may be for performing all or some of the functions of the respective units.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for operating a portable terminal, the method comprising:
searching for a view including a touch region among two or more views displayed;
determining whether a bypass function is set for the searched view; and
determining whether to execute a command corresponding to the view according to whether the bypass function is set.

2. The method of claim 1, further comprising:
receiving a selection of a specific region from a user; and
checking coordinates of the touch region.

3. The method of claim 1, wherein the two or more views displayed are views that are displayed on a display unit of the portable terminal sequentially from the bottom in a vertical direction such that the views are superimposed at least partially.

4. The method of claim 1, wherein the bypass function is a function for determining whether to execute a command corresponding to a touched view when any one of the two or more views displayed is touched.

5. The method of claim 1, wherein the determining of whether to execute a command corresponding to the view according to whether the bypass function is set comprises executing a command corresponding to the searched view when the bypass function is set to false for the searched view.

6. The method of claim 1, wherein the determining of whether to execute a command corresponding to the view according to whether the bypass function is set comprises determining whether a bypass function is set for a second-order view, without executing a command corresponding to the searched view when the bypass function is set to true for the searched view.

7. The method of claim 6, wherein the second-order view is a view that is superimposed at least partially with a region of the view set to true and is located beneath the view set to true.

8. The method of claim 1, wherein the view includes at least one of a keypad, a pop-up window, a picture, and a moving image.

9. A method for operating a portable terminal, the method comprising:
displaying two or more views;
determining whether a bypass function is automatically set for each of the views displayed; and
determining whether to execute a command corresponding to the view according to whether the bypass function is set.

10. The method of claim 9, wherein the bypass function is a function for determining whether to execute a touched view when any one of the two or more views displayed is touched.

11. The method of claim 9, wherein the determining of whether to execute a command corresponding to the view according to whether the bypass function is set comprises executing a command corresponding to the displayed view when the bypass function is set to false for the displayed view.

12. The method of claim 9, wherein the determining of whether to execute a command corresponding to the view according to whether the bypass function is set comprises determining whether the bypass function is set in a second-order view, without executing a command corresponding to the displayed view when the bypass function is set to true for the displayed view.

13. The method of claim 9, wherein the view includes at least one of a keypad, a pop-up window, a picture, and a moving image.

14. An electronic device, comprising:
one or more processors;
memory; and
one or more programs, wherein the one or more programs are stored in the memory and configured to cause, when executed by the electronic device, the electronic device to perform the method of any of claims 1 to 8.

15. An electronic device, comprising:
one or more processors;
memory; and
one or more programs, wherein the one or more programs are stored in the memory and configured to cause, when executed by the electronic device, the electronic device to perform the method of any of claims 9 to 13.
